(19) Europäisches Patentamt
European Patent Office
Office européen des brevets

(11) EP 3 605 334 A1

(12) EUROPEAN PATENT APPLICATION

(43) Date of publication:
05.02.2020 Bulletin 2020/06

(51) Int Cl.:
*G06F 9/54* $^{(2006.01)}$

(21) Application number: 18186631.0

(22) Date of filing: 31.07.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Prowler.io Limited
Cambridge, Cambridgeshire CB2 1LA (GB)**

(72) Inventors:
• **MGUNI, David
Cambridge, Cambridgeshire CB2 1LA (GB)**
• **CEPPI, Sofia
Cambridge, Cambridgeshire CB2 1LA (GB)**
• **MACUA, Sergio Valcarel
Cambridge, cambridgeshire CB2 1LA (GB)**
• **MUNOZ DE COTE, Enrique
Cambridge, Cambridgeshire CB2 1LA (GB)**

(74) Representative: **EIP
EIP Europe LLP
Fairfax House
15 Fulwood Place
London WC1V 6HU (GB)**

(54) **INCENTIVE CONTROL FOR MULTI-AGENT SYSTEMS**

(57)    A machine learning system comprises: a set of agents, each having associated processing circuitry and associated memory circuitry, the associated memory circuitry of each agent holding a respective policy for selecting an action in dependence on the agent making an observation of an environment; and a meta-agent having associated processing circuitry and associated memory circuitry. The associated memory circuitry of each agent further holds program code which, when executed by the associated processing circuitry of that agent, causes that agent to update iteratively the respective policy of that agent, each iteration of the updating comprising, for each of a sequence of time steps: making an observation of the environment; selecting and performing an action depending on the observation and the respective policy; and determining a reward in response to performing the selected action, the reward depending on a reward modifier parameter. Each iteration of the updating further includes: generating trajectory data dependent on the observations made, the actions performed, and the rewards determined at each of the sequence of time steps; and updating the respective policy using the sequentially generated trajectory data. The iterative updating causes the respective policy of each of the agents to converge towards a respective stationary policy, thereby substantially inducing equilibrium behaviour between the agents. The associated memory circuitry of the meta-agent holds program code which, when executed by the associated processing circuitry of the meta-agent, causes the agent to: determine a system reward depending on the equilibrium behaviour of the agents; determine, using the determined system reward, an estimated system value associated with the equilibrium behaviour of the agents; and determine, using the estimated system value, a revised reward modifier parameter for determining subsequent reward signals for the plurality of agents.

Fig. 1

EP 3 605 334 A1

**Description**

Technical Field

The present invention relates to methods and systems for inducing desirable equilibrium behaviour in a system of reinforcement learning agents.

Background

Many systems involve multiple agents strategically interacting with an environment. In some cases, self-interested agents interact with an environment by following respective stochastic policies, each agent having the aim of maximising a respective cumulative reward. Using multi-agent reinforcement learning (MARL), the agents iteratively update their respective policies as they interact with the environment, in some cases causing the behaviour of the agents to converge to a stable equilibrium. Under certain conditions, such a system of self-interested agents interacting with an environment can be modelled as a Markov game, and the resulting equilibrium is a Markov-Nash equilibrium. However, an equilibrium reached by a system of self-interested agents performing MARL is likely to be inefficient in terms of the rewards received by the agents.

One approach for ensuring desirable behaviour in a system of agents is to employ a centralised learner to determine policies for the agents. Such an approach typically becomes prohibitively computationally expensive for large numbers of agents (for example hundreds or thousands of agents), with the cost of the learning computation scaling exponentially with the number of agents. Such an approach also requires large volumes of data to be transferred between the agents and the centralised learner, which may not be feasible or practicable, particularly for cases in which the number of agents is large, and/or in which the agents are remote from the centralised learner. Finally, such an approach is only applicable for cases in which a single entity has control of all of the agents and can thus ensure the agents will work selflessly, as opposed to self-interestedly, towards a common objective.

In order to alleviate the computational difficulties of centralised learning, methods have been developed to distribute reinforcement learning computations among the agents themselves. Such methods still require that the agents work selflessly towards a common objective, and further require transfer of data between the agents in order to perform the distributed computations, which may be impracticable or undesirable.

Summary

According to an aspect of the invention, there is provided a machine learning system comprising: a set of agents, each having associated processing circuitry and associated memory circuitry, the associated memory circuitry of each agent holding a respective policy for selecting an action in dependence on the agent making an observation of an environment; and a meta-agent having associated processing circuitry and associated memory circuitry. The associated memory circuitry of each agent further holds program code which, when executed by the associated processing circuitry of that agent, causes the agent to update iteratively the respective policy of that agent, each iteration of the updating comprising, for each of a sequence of time steps: making an observation of the environment; selecting an action depending on the observation and the respective policy; and determining a reward depending on the selected action, the reward depending on a reward modifier parameter. Each iteration of the updating further includes: generating trajectory data dependent on the observations made, the actions performed, and the rewards determined at each of the sequence of time steps; and updating the respective policy using the sequentially generated trajectory data. The iterative updating causes the respective policy of each of the agents to converge towards a respective stationary policy, thereby substantially inducing equilibrium behaviour between the agents. The associated memory circuitry of the meta-agent holds program code which, when executed by the associated processing circuitry of the meta-agent, causes the agent to: determine a system reward depending on the equilibrium behaviour of the agents; determine, using the determined system reward, an estimated system value associated with the equilibrium behaviour of the agents; and determine, using the estimated system value, a revised reward modifier parameter for determining subsequent reward signals for the plurality of agents.

The present system may, for example, be used to induce a system of independent, self-interested agents to work together towards a common goal. In such an example, the present system may be contrasted with a system of agents following policies determined by a centralised learner, in that the agents in the present system perform reinforcement learning independently, and the actions of the meta-agent only affect the agents indirectly by modifying an incentivisation structure for the agents. Since the agents in the present system are independent, the present system is readily scalable to large numbers of agents, for example hundreds or thousands of agents. Furthermore, the agents in the present system are self-interested, and therefore it is not necessary for a single entity to have direct control of the agents in order to achieve desirable behaviour of the agents.

The present system may also be contrasted with distributed learning methods, in which agents share information with each other and effectively perform a distributed learning computation. As mentioned above, the agents in the present system are not required to work selflessly towards a common objective, nor is any transfer of data between the agents necessary.

It is noted that in the present system, the meta-agent is not required to be able to directly alter behaviour of the agents, for example by modifying program code, memory and/or communication capabilities of the agents, any of which may be impractical or impossible, for example in the case of remotely-deployed agents. By contrast, the present invention may be used in open systems where the meta-agent cannot directly modify the agents, but can only indirectly alter the behaviour of the agents by providing incentives to the agents.

Brief Description of the Drawings

Figure 1 is a schematic block diagram representing a system in which multiple agents interact with an environment.
Figure 2 is a flow diagram representing a routine executed by a system of agents and a meta-agent in accordance with the present invention.
Figure 3 is a flow diagram representing a routine executed by a meta-agent to determine a revised reward modifier parameter.
Figure 4 shows a plot of a prior distribution for a one-dimensional system value function.
Figure 5 shows a plot of a posterior distribution for a one-dimensional system value function, and a plot of an acquisition function determined from the posterior distribution.
Figure 6 is a schematic block diagram representing a computing device for implementing an agent.
Figure 7 is a schematic block diagram representing a computing device for implementing a meta-agent.
Figure 8 shows a system of autonomous robots moving in a two-dimensional region.

Detailed Description

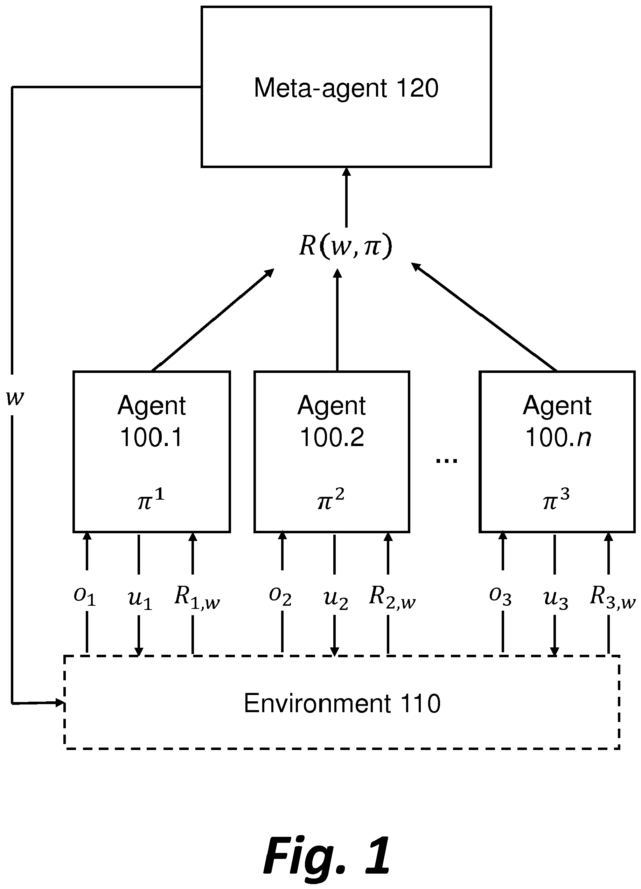

In the example of Figure 1, a set $N = \{1, ..., n\}$ of autonomous agents 100 (of which agent 100.1, agent 100.2, and agent 100.$n$ are shown) interact with an environment 110. In the present example, the environment 110 is a physical environment, and each agent 100 is associated with a robot having one or more sensors and one or more actuators. Each agent 100 is further associated with a computing module comprising memory and processor circuitry. At each of a sequence of time steps (which may or may not be evenly temporally-separated), each robot makes an observation of the environment 110 using the one or more sensors, and the agent 100 receives an observation signal indicative of the observation. In many systems, the information conveyed by an observation signal does not convey a complete description of a state of the environment because, for example, the sensors of the corresponding robot may have limited sensing capabilities and physical obstructions within the environment 110 may restrict the sensing of the environment 110. In other words, each agent 100 is generally only able to partially observe the state of the environment. Furthermore, the agents 100 generally have no *a priori* model of the environment, and accordingly the only information stored by each agent 100 regarding the environment 110 is that conveyed by the observation signals. It is noted that a state of the environment 110 includes variables associated with the agents 100 themselves. For example, in the present example the state of the environment 110 includes the location of each robot. In another example, the agents 100 are associated with autonomous vehicles, and the state of the environment includes the locations of the autonomous vehicles.

Each agent 100 selects actions according to a respective (stochastic) policy, and sends control signals to the associated robot corresponding to the selected actions, causing the associated robot to perform the selected actions on the environment 110 using the one or more actuators. The respective policy of an agent 100 is a conditional distribution over a set of possible actions given a current observation signal. Generally, the performed actions affect subsequent states of the environment 110, and accordingly may affect observation signals received by one or more of the agents 100 at subsequent time steps. At each time step, the agents 100 proceed on the assumption that the next state of the environment 110 is determined by the current state of the environment 110 and the actions performed by the set $N$ of agents 100 in accordance with a state transition probability distribution. The state transition probability distribution is generally not known *a priori,* but is assumed to remain constant over the course of the learning process. The independence of the state transition probability distribution from states of the environment preceding the current state of the environment 110 is referred to as the Markov property, and the environment 110 is sometimes referred to as "memoryless" by virtue of satisfying the Markov property. The present invention is applicable in systems where the above assumptions hold, or approximately hold (for example, in cases where a state transition probability distribution changes over a time scale much greater than that of the learning process described hereafter).

Each time an agent 100 selects an action, causing the associated robot to perform the selected action, the agent 100 determines a reward. The reward determined at a given time step generally depends on the state of the environment 110 at the given time step, the action selected by that agent 100 at the given time step, and may depend on actions selected by one or more of the other agents 100 at the given time step. In this example, the reward is a real number, and the objective of each agent 100 is to update its respective policy, to maximise a (possibly discounted) expected cumulative reward over a predetermined (possibly infinite) number of time steps. Each agent 100 can therefore be described as self-interested or rational, as each agent 100 only seeks to maximise its own cumulative reward.

Some examples in accordance with the present invention involve continuing or infinite horizon tasks, in which agents continue to interact with an environment for an indefinite number of time steps. For a continuing task, the number of time steps over which the agents seek to maximise an expected cumulative reward may be infinite, in which case a multiplicative discount factor is included to ensure convergence of the expected cumulative reward. Other examples involve episodic tasks, in which agents interact with an environment in a series of episodes, each episode having a finite number of time steps. The number of time steps for an episodic task may be predetermined, may be random, or may be dependent on the system reaching particular states (for example, an episodic task may have one or more predetermined terminal states, such that when the system reaches a terminal state, the episode ends). For episodic tasks, the initial state of the system may be different for different episodes, and may, for example, be modelled using an initial state probability distribution. The initial state probability distribution may be *a priori* unknown to the agents. For an episodic task, agents generally aim to maximise an expected cumulative reward over a single episode.

A system of agents interacting with an environment, according to the assumptions described above, defines a Markov Game (MG). A special class of MG is a Markov Potential Game (MPG). An MPG is distinguished from the more general class of MGs by the property that the incentive of the agents to change strategy is expressible using a single global function called a potential function, as described hereafter. MPGs arise in systems in which agents compete for a common resource or share common limitations. Examples include communication devices sharing limited frequency bands in a communication network (spectrum sharing), electrical devices sharing a limited power source (for example, an electricity grid), multiple users sharing limited computing resources in a cloud computing environment, or a set of robots sharing limited physical space, for example in swarm robotics. MPGs include congestion games, which model, for example, traffic flow in a transport network, and therefore MPG models may be applied to understand and optimise the behaviour of vehicles (for example, autonomous vehicles) in a transport network. MPGs also arise in cooperative or team games, in which independent agents work together to achieve a common objective. Examples include distributed logistics and network packet delivery problems.

An MPG is defined as a MG in which, for every possible joint policy $\pi$ followed by a set of agents (where a joint policy followed by a set of agents refers to a set of respective policies followed simultaneously by the set of agents), there exists a function $\tilde{\Phi}^{\pi^i,\pi^{-i},w}(s)$ such that a change in state value of a state $s$ for an agent, induced by the agent changing respective policy from $\pi^i$ to $\pi'^i$, is expressible in terms of the function $\tilde{\Phi}^{\pi^i,\pi^{-i},w}(s)$ according to Equation (1):

$$v_i^{\pi^i,\pi^{-i},w}(s) - v_i^{\pi'^i,\pi^{-i},w}(s) = \tilde{\Phi}^{\pi^i,\pi^{-i},w}(s) - \tilde{\Phi}^{\pi'^i,\pi^{-i},w}(s), \qquad (1)$$

where the state value $v_i^{\pi^i,\pi^{-i},w}(s)$ is defined according to Equation (2) below. In cases where this condition is satisfied, the function $\tilde{\Phi}^{\pi^i,\pi^{-i},w}(s)$ is referred to as a potential function.

The present invention is applicable to MPGs and to systems that can be modelled with sufficient accuracy by MPGs. For such systems, it can be shown that by tuning the rewards of the agents 100, a given objective can be maximised, as will be described in detail hereafter.

The process by which each agent 100 learns a respective policy so that the collective behaviour of the agents 100 converges towards an equilibrium is referred to as multi-agent reinforcement learning (MARL). During the MARL process, each agent 100 iteratively updates its respective policy with the objective of maximising an expected sum of (possibly discounted) rewards over a sequence of time steps. Eventually, the respective policies of the agents 100 will converge to fixed policies, resulting in an equilibrium in which no agent 100 can increase its cumulative discounted reward by deviating from its current respective policy. In this situation, each agent 100 is said to have determined a Best Response (BR) policy, and the resulting equilibrium corresponds to a Markov-Nash Equilibrium (M-NE) of the corresponding MPG. The M-NE to which the policies of the agents 100 converge will depend on parameters of the MPG (including the rules governing the reward signals received by the agents 100) and the learning process of each of the agents 100 (which may vary between the agents 100).

A system such as that illustrated in Figure 1 may have multiple possible M-NEs. The present invention provides a method of inducing favourable M-NEs with respect to a predefined system metric by providing incentives to the agents 100 and modifying the provided incentives when an M-NE is substantially reached, whilst assuming that the agents 100 will continue to act self-interestedly. To achieve this, the system of Figure 1 further includes a meta-agent 120, which is arranged to determine system rewards depending on the equilibrium behaviour of the agents 100, and determine, using the determined system rewards, a reward modifier parameter for modifying the rewards determined by the agents 100.

In the present example, a reward determined by an agent 100 corresponds to the sum of an intrinsic reward component and a reward modifier component. The meta-agent 120 is unable to influence the intrinsic reward component, but the reward modifier component is dependent on the reward modifier parameter and accordingly the meta-agent 120 is able to influence the reward modifier component by revising the reward modifier parameter. In other words, the meta-agent 120 provides incentives to the agents in the form of the reward modifier parameter. In other examples, a reward may include a different composition or combination of an intrinsic reward component and a reward modifier component, or may consist entirely of a reward modifier component, but in any example the meta-agent influences the reward vale by updating the reward modifier parameter.

The intrinsic reward component and the reward modifier component determined at a given time step may both depend on the observation signal received by the agent 100 at the given time step, the action selected by that agent 100 at the given time step, and may depend on actions selected by one or more of the other agents 100 at the given time step. The reward modifier component also depends on the reward modifier parameter generated by the meta-agent 120.

As described above, the memory of each agent 100 holds a respective policy for selecting actions in dependence on received observation signals. In the present example, the memory of each agent 100 further holds a respective state value estimator. The respective state value estimator for a given policy approximates the state value function for the given policy, where the state value function gives the expected discounted reward that the agent 100 will receive over a predetermined (possibly infinite) number of time steps, given an initial state of the environment, assuming that the agent continues to select actions according to the given policy. The state value function of each agent 100 is *a priori* unknown, and in most examples is extremely challenging to obtain. Obtaining the state value function is made particularly challenging by the fact that each agent 100 may only partially observe the environment 110, as mentioned above. To overcome the difficulty of obtaining the state value function, each agent 100 determines a state value estimator from trajectory data generated by that agent 100, and uses this state value estimator in place of the state value function, as will be described in more detail hereafter.

In the present example, the state value function for the $i^{th}$ agent is given by Equation (2):

$$v_i^{\pi^i, \pi^{-i}, w}(s) = E\left[\sum_{t=0}^{T_s} \gamma_i^t R_{i,w}\left(s_t, u_{i,t}, u_{-i,t}\right) | u \sim \pi, s_0 = s\right] \tag{2}$$

Equation (2) states that a state value $v_i^{\pi^i, \pi^{-i}}(s)$ of a state $s$, for the $i^{th}$ agent 100, when the $i^{th}$ agent 100 follows a policy $\pi^i$, and the other agents 100 follow a joint policy $\pi^{-i}$ (denoting the policies of all of the agents 100 other than the $i^{th}$ agent 100), is given by the expected sum of discounted rewards determined by the $i^{th}$ agent 100 over $T_s$ time steps. For a continuing task, $T_s$ may be infinite. For an episodic task, $T_s$ is finite.

A discounted reward determined at a given time step is a product of a reward $R_{i,w}(s_t, u_{i,t}, u_{-i,t})$ determined at the given time step, and a discount factor $\gamma_i \in [0,1]$, which determines the relative value that the $i^{th}$ agent 100 assigns to subsequent rewards in comparison to the present reward. In some examples involving episodic tasks, $\gamma_i \equiv 1$, so the cumulative reward is not discounted. In cases where the cumulative reward is discounted, a lower discount factor results in an agent 100 being more "short-sighted" and assigning relatively more value to immediate rewards in comparison to future rewards. In Equation (2), $s_t$ denotes the state of the environment 110 at time step $t$ (which is generally unknown to any given agent 100), $u_{i,t}$ denotes the action performed by the $i^{th}$ agent 100 at time step $t$, and $u_{-i,t}$ denotes the combined action performed by the other agents 100 at time step $t$. The combined action performed by all of the agents 100 is denoted $u$, and the joint policy of all of the agents 100 is denoted $\pi$.

The reward $R_{i,w}(s_t, u_{i,t}, u_{-i,t})$ in the present example is given by Equation (3):

$$R_{i,w}\left(s_t, u_{i,t}, u_{-i,t}\right) = R_i\left(s_t, u_{i,t}, u_{-i,t}\right) + \Theta\left(s_t, u_{i,t}, u_{-i,t}, w\right). \tag{3}$$

where $R_i(s_t, u_{i,t}, u_{-i,t})$ is an intrinsic reward component and $\Theta(s_t, u_{i,t}, u_{-i,t}, w)$ is a reward modifier component. The reward modifier component depends on a reward modifier parameter w, which is determined by the meta-agent 120 as will be described in more detail hereafter. In this example, the reward modifier component is generated by an $n$ -order series expansion of the form

$$\Theta\left(s_t, u_{i,t}, u_{-i,t}, w\right) = w_0 + w_1^T\left[s_t, u_{i,t}, u_{-i,t}\right] + w_2^T\left[s_t, u_{i,t}, u_{-i,t}\right]^2 + \ldots + w_n^T\left[s_t, u_{i,t}, u_{-i,t}\right]^k,$$

where the coefficients $w_j$ are rank $j$ tensors determined by the meta-agent 120, and the array $[s_t, u_{i,t}, u_{-i,t}]$ represents the state of the environment 110 and the joint actions of the agents 100 at time step $t$. The reward modifier parameter $w$ contains all of the components of the tensors $w_m$ for $m = 1, \ldots, k$. In other examples, the reward modifier component may be generated differently, for example using a Fourier basis in $[s_t, u_{i,t}, u_{-i,t}]$, which may be appropriate in cases where the state components are expected to exhibit periodicity. In further examples, the reward modifier component may be determined by a neural network, in which case $w$ corresponds to connection weights in the network.

As discussed above, the agents 100 in the present example only partially observe the environment 110, and do not have a model of the environment 110 *a priori*. The agents 100 are therefore unable to compute the state value function of Equation (1). In order to overcome this problem, in the present example each agent 100 stores, in memory, a respective state value estimator $\hat{v}_i^{\pi^i, \pi^{-i}, w}(o_i)$ that returns an approximate value for each observation signal $o_i$. In this example, each agent 100 implements its respective state value estimator using a neural network that takes a vector of values representing an observation signal as an input, and outputs an estimated state value corresponding to the expected sum of discounted reward signals received by the $i^{th}$ agent 100 over a predetermined number $T_s$ of time steps, similar to the state value of Equation (2). It is noted that whereas a state value function depends on the state of the environment, the state value estimator depends on an observation signal received an agent 100.

As mentioned above, the respective policy $\pi^i$ of the $i^{th}$ agent 100 is a conditional distribution over a set of possible actions given a current observation signal $o_i$. In this example, the policy is implemented using a neural network that takes a vector of values representing an observation signal as an input, and outputs parameters of a distribution from which actions can be sampled. The parameters output by the deep neural network may be, for example, a mean and/or variance of a Gaussian distribution, where different values sampled from the Gaussian distribution correspond to different actions. In other examples, other distributions may be used. In some examples, an agent 100 may use the same deep neural network for the respective state value estimator and the respective policy.

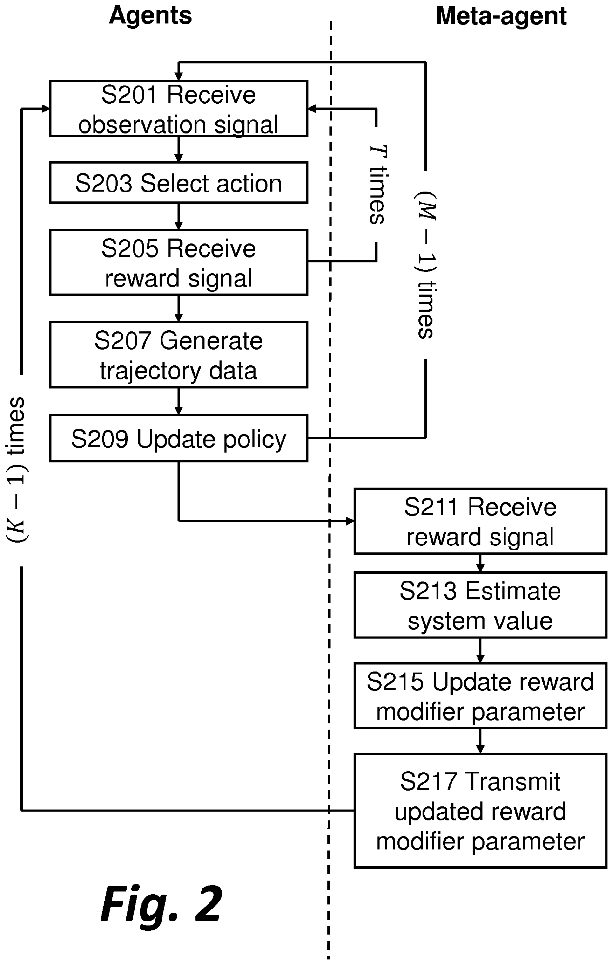

In order for the agents 100 to iteratively update the respective policies and state value estimators, the agents 100 perform an MARL process, where each agent 100 in the present example employs an actor-critic method, with the respective state estimator $\hat{v}_i^{\pi^i, \pi^{-i}, w}(o_i)$ as the "critic" and the respective policy $\pi^i$ as the "actor". During each iteration of the updating, each agent 100 performs the procedure shown in S201-S205 of Figure 2 for each of a sequence of time steps $t = 0, 1, 2...T$, where $T$ is finite. In the present example, $T = T_s$, corresponding to the number of time steps in an episode of the MARL task. In the case of a continuing task, $T$ may be a predetermined number.

As shown in Figure 2, the $i^{th}$ agent 100 receives, at S201, an observation signal $o_{i,t}$ corresponding to an observation of the environment 110 at time step $t$. Each agent 100 selects, at S203, an action $u_{i,t}$ depending on the received observation signal $o_{i,t}$ and the current respective policy $\pi^i$. As discussed above, in the present example an agent 100 selects an action $u_{i,t}$ by sampling from a distribution having parameters output by a neural network held in the memory of the agent 100.

In response to performing a selected action, each agent 100 sends a control signal to a robot associated with that agent 100, causing the robot to perform the selected action. The agent 100 determines, at S205, a reward $R_{i,w}$. The reward $R_{i,w}$ generally depends on the state of the environment 110 at time $t$, as well as the combined actions selected by the agents 100 at time step $t$. The reward $R_{i,w}$ also depends on a reward modifier parameter $w$. In this example, the reward $R_{i,w}$ includes an intrinsic reward component $R_i$ and a reward modifier component $\Theta$ according to Equation (3) above, where only the reward modifier component depends on the reward modifier parameter $w$. The agents 100 in the present example do not have *a priori* knowledge of how the reward depends on the state of the environment 110 or the combined actions of the agents 100, and in this example an agent 100 determines a reward by receiving a reward signal from the environment 110. In other examples, a computing device implementing an agent may determine either or both components of the reward from other data received from the environment 110.

Each agent 100 generates, at S207, trajectory data corresponding to observation signals and actions experienced by the agent 100 over the sequence of time steps $t = 0, 1, 2...T$. In this example, the trajectory data generated by the $i^{th}$ agent 100 includes, for each time step $t = 0, ..., T - 1$, data representative of the observation signal $o_{i,t}$ received at the time step $t$, the action $u_{i,t}$ performed at the time step $t$, the reward $R_{i,w}$ determined after performing the action $u_{i,t}$, and the observation signal $o_{i,t+1}$ received at time step $t+1$. The agent updates, at S209, the respective policy $\pi^i$ using the generated trajectory data.

In the present example, each agent 100 implements the advantage actor-critic (A2C) algorithm to update the respective policy $\pi^i$. In doing so, each agent 100 first updates the respective state value estimator $\hat{v}_i^{\pi^i,\pi^{-i},w}(o_i)$ using the generated trajectory data. This step is referred to as policy evaluation. In the present example, the agents 100 use temporal difference learning to update $\hat{v}_i^{\pi^i,\pi^{-i},w}(o_i)$, in which the state value estimator is computed by passing observation signals through the neural network implementing the state value estimator, backpropagating a temporal difference error through the neural network to determine a gradient of $\hat{v}_i^{\pi^i,\pi^{-i},w}(o_i)$ with respect to parameters of the neural network, and performing stochastic gradient descent to update the parameters of the neural network such that the temporal difference error is reduced. In some examples, the gradient used in stochastic gradient descent is augmented using a vector of eligibility traces, as will be understood by those skilled in the art. Each agent 100 then updates the respective policy $\pi^i$ on the basis of the updated respective state value estimator $\hat{v}_i^{\pi^i,\pi^{-i},w}(o_i)$. In the A2C algorithm, the respective policy $\pi^i$ is updated using policy gradient ascent, with the policy gradient estimated based on an advantage function determined from the trajectory data. It will be appreciated that other actor-critic algorithms may be used to update the respective policies of agents without departing from the scope of the invention, for example the asynchronous advantage actor-critic (A3C) algorithm. In other examples, other known reinforcement learning algorithms may be used instead of actor-critic algorithms, for example value-based methods or policy-based methods. As mentioned above, in some examples different agents in a system may implement different reinforcement learning algorithms.

The agents 100 continue to perform steps S201 to S209 iteratively, causing the respective policy $\pi^i$ of each of the agents 100 to converge towards a respective BR policy. A joint policy $\pi$ resulting from each of the agents 100 implementing a BR policy corresponds to a M-NE of the MPG associated with the system, and therefore the iterative updating substantially induces an M-NE between the agents 100. In the present example, the agents 100 perform a predetermined number $M$ of MARL iterations, where $M$ is chosen to be large enough that substantial convergence to an M-NE is expected. In other examples, agents perform MARL until predetermined convergence criteria are satisfied, indicating that the joint policy of the agents has substantially reached an M-NE.

At the M-NE, the state value of every state s of the environment 110, for every one of the agents 100, satisfies Equation (4):

$$v_i^{\pi^i,\pi^{-i},w}(s) \geq v_i^{\pi'^i,\pi^{-i},w}(s), \qquad (4)$$

for every possible alternative policy $\pi'^i$ of the $i^{th}$ agent 100. Equation (4) states that the state value of each state of the environment 110 for the $i^{th}$ agent 100 following the policy $\pi^i$ is greater or equal to the state value of that state if the agent 100 followed the alternative policy $\pi'^i$. Every MPG has at least one M-NE.

The meta-agent 120 determines, at S211, a system reward $R_{MA}(w,\pi)$ depending on the equilibrium behaviour of the agents 100. In the present example, the meta-agent 120 receives an observation signal corresponding to an observation of the environment 110 after the agents 100 have performed the $M$ iterations of MARL, and determines a system reward in accordance with the observation. In a specific example, the observation includes the physical locations of the agents 100, and the system reward depends on a deviation of the distribution of the agents 100 from a desired distribution. In another example in which agents are associated with autonomous taxis, the desired distribution is chosen to match expected customer demand.

In other examples, the agents 100 send data directly to the meta-agent 120, from which the meta-agent 120 determines the system reward $R_{MA}(w,\pi)$. The data sent to the meta-agent 120 may include trajectory data generated by the agents 100 after the joint policy of the agents 100 is expected to have substantially converged to an M-NE. In some such examples, each agent 100 stores trajectory data generated by that agent 100 during the last $M_c$ iterations of MARL, where $M_c < M$. In other examples, the agents 100 continue to interact with the environment 110 and to generate trajectory data subsequent to the $M$ iterations of MARL, and store the subsequently-generated trajectory data. Either of these cases result in the agents 100 storing trajectory data for a sequence of time steps in which the joint policy of the agents 100 is expected to have substantially converged to an M-NE, and each agent 100 may send some or all of this trajectory data to the meta-agent 120 for determining a system reward.

Additionally, or alternatively, each agent 100 may send data to the meta-agent 120 corresponding to the state value estimator for that agent 100 (for example, connection weights of a neural network used to implement the state value estimator, in the case that the state value estimator is implemented using a neural network), and/or reward values determined by the agents 100 after the joint policy of the agents 100 is expected to have substantially converged to an M-NE.

In the some examples, the system reward $R_{MA}(w,\pi)$ is "trajectory targeted", such that the system reward depends on the Markov chain $X^\pi$ induced by the agents 100 following the joint policy $\pi$ (which is assumed to have substantially converged to a M-NE associated with the system). In such cases, the system reward can be modelled as $R_{MA}(w,\pi) = R_{MA}(w,X^\pi,\zeta)$, where $\zeta$ is an independent identically distributed random variable accounting for randomness in the system reward. For example, if the system reward depends on an observation of the environment 110, the observation may be subject to random noise. In other examples, a task itself may have a stochastic output. In the case of a trajectory targeted system reward, the meta-agent 120 is directly rewarded in accordance with the behaviour of the agents 100. In an example where agents are associated with autonomous vehicles, a trajectory targeted system reward may be used, for example, to reward a meta-agent for inducing even traffic flow over a network, and to penalise the meta-agent for inducing congestion.

In other examples, the system reward $R_{MA}(w,\pi)$ is "welfare targeted", such that the meta-agent's 120 objective is to maximise a function $h(\cdot)$ of the state value estimators of the individual agents. For example, a utilitarian meta-agent 120 may seek to maximise a sum of individual state value estimators of the agents 100, whereas an egalitarian meta-agent 120 may seek to maximise a minimum state value estimator of the agents 100. In such examples, the system

$$R_{MA}(w,\pi) = R_{MA}\left(w, h\left(\times_{i\in N} v_i^{\pi^i,\pi^{-i},w}\right), \zeta\right)$$

reward can be modelled as                                                                                                   for a uniformly continuous function $h$. Using a welfare targeted system reward, the meta-agent 120 may, for example, incentivise the agents 100 to reach equilibrium behaviour that results in the best overall outcome for the agents 100.

The meta-agent 120 estimates, at S213, a system value $J(w,\pi)$ corresponding to the value, with respect to the system reward $R_{MA}(w,\pi)$, of applying the reward modifier parameter $w$, resulting in the agents 100 following the joint policy $\pi$. In this example, the system value $J(w,\pi)$ is an expected value of the system reward $R_{MA}(w,\pi)$, as given by Equation (5):

$$J(w,\pi) = E\left[R_{MA}(w,\pi)\right]. \qquad\qquad (5)$$

The meta-agent 120 has the objective of maximising the value of $J(w,\pi)$ by varying the parameter $w$. Due to the flexibility in the definition of $R_{MA}(w,\pi)$, as discussed above, this framework allows for different objectives to be incentivised.

In the present example, the meta-agent 120 estimates the system value $J(w,\pi)$ using the system reward $R_{MA}(w,\pi)$ determined at S211. The value of $R_{MA}(w,\pi)$ is an unbiased estimator of $J(w,\pi)$, and therefore using $R_{MA}(w,\pi)$ as an estimate of $J(w,\pi)$ allows for stochastic optimisation of $J(w,\pi)$. In some examples, multiple evaluations of $R_{MA}(w,\pi)$ may be used to estimate $J(w,\pi)$. For example, in the case of an episodic task, multiple episodes may be run after the joint policy of the agents is determined, or assumed, to have converged, with each episode leading to the meta-agent 120 receiving a system reward $R_{MA}(w,\pi)$. The system value $J(w,\pi)$ is then estimated as a mean value of the rewards received by the meta-agent 120. In the case of a continuing task, multiple evaluations of the system reward $R_{MA}(w,\pi)$ can similarly be used to estimate a value of the system value $J(w,\pi)$.

The meta-agent 120 uses the estimated system value $J(w,\pi)$ to determine, at S215, a revised reward modifier parameter $w'$ for modifying subsequent rewards for the agents 100. The meta-agent 120 updates the reward modifier parameter with the aim of inducing a new joint policy $\pi'$ having a greater associated system value i.e. $J(w',\pi') > J(w,\pi)$. It is not assumed that any functional form of the system value with respect to w is known *a priori* by the meta-agent 120, and therefore for the present invention, the meta-agent 120 uses black box optimisation to determine the revised reward modifier parameter. For large numbers of agents and/or systems with high-dimensional state and/or action spaces, determining a revised reward modifier component may not be tractable using, for example, a gradient-based optimisation method. In order to overcome this difficulty, in the present example the meta-agent 120 uses Bayesian optimisation to determine the revised reward parameter, as will be described in more detail hereafter. It will be appreciated, however, that in other examples other optimisation methods may be used to determine a revised reward modifier component, for example gradient-based optimisation methods.

The meta-agent 120 transmits, at S217, the revised reward modifier $w'$ for modifying subsequent rewards for the agents 100. In some examples, the revised reward modifier $w'$ is transmitted to the environment 110, such that the agents 100 will subsequently determine rewards depending on the revised reward modifier parameter. In examples where the reward modifier component for each agent 100 is determined by a computing device associated with the agent 100, the meta-agent 120 may transmit the revised reward modifier parameter to the computing devices associated with the agents 100.

The routine of Figure 2 is repeated $K$ times, where in this example $K$ is a predetermined number. In other examples, the optimisation process may instead be repeated until predetermined convergence criteria are satisfied, or may be repeated indefinitely, for example in cases where an environment is expected to change slowly over time. For each of the $K$ iterations of optimisation, the meta-agent 120 estimates a system value $J(w_k,\pi_k)$ for a fixed reward modifier parameter $w_k$ and resulting converged joint policy $\pi_k$, where $k = 1, ...,K$ is the iteration number, and uses the estimated system value $J(w_k,\pi_k)$ to determine a revised reward modifier parameter $w_{k+1}$.

During each of the K iterations, the behaviour of the agents 100 substantially converges to an M-NE associated with the system, with an increase in the system value received by the meta-agent 120 expected after each iteration. In this way, desirable behaviour is induced in the agents 100, whilst allowing the agents 100 to continue to act independently and in a self-interested manner. The routine of Figure 2 is an inner-outer loop method, where the inner loop refers to the $M$ iterations of MARL performed by the agents 100, and the outer loop refers to the $K$ iterations of optimisation of the reward modifier parameter performed by the meta-agent 120. The inner-outer loop method of Figure 2 has favourable convergence properties compared with, for example, a method that attempts to simultaneously update the respective policies of the agents along with the reward modifier parameter.

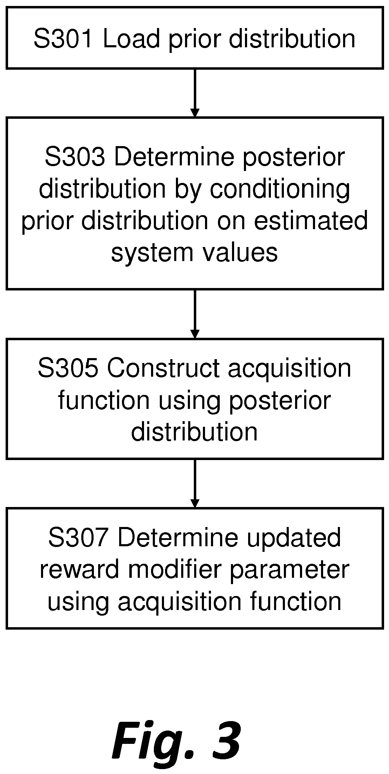

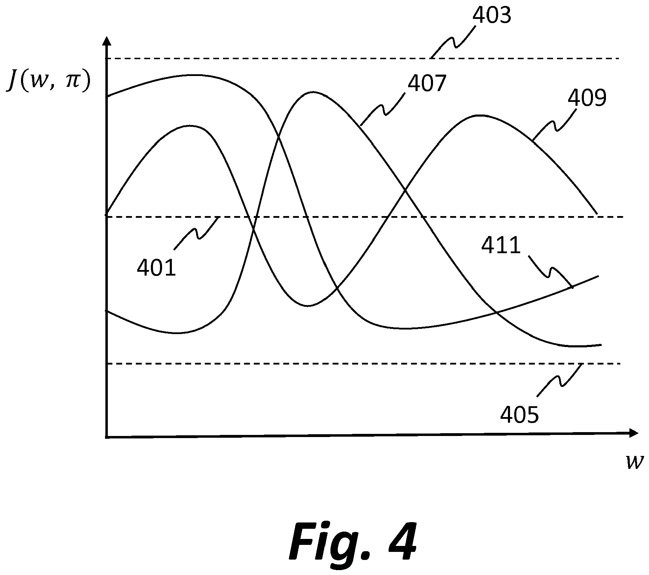

As mentioned above, in the present example the meta-agent 120 uses Bayesian optimisation to update the reward modifier parameter. Accordingly, the meta-agent 120 treats the system value $J(w,\pi)$ as a random function of $w$ having a prior distribution over the space of functions. Figure 3 shows a routine performed by the meta-agent 120 at each of the $K$ optimisation iterations. The meta-agent 120 loads, at S301, data corresponding to the prior distribution into working memory. In this example, the prior distribution is constructed from a predetermined Gaussian process prior, and the data corresponding to the prior distribution includes a choice of kernel (for example, a Matérn kernel) as well as hyperparameters for the resulting Gaussian process prior. For illustrative purposes, Figure 4 shows an example of a prior distribution constructed for a system value $J(w,\pi)$ in the case of a scalar reward modifier parameter $w$. The prior distribution in this example has a constant mean function, represented by the dashed line 401. The dashed lines 403 and 405 are each separated from the mean function by twice the standard deviation of the prior distribution at each value of $w$, and solid curves 407, 409, and 411 are sample functions taken from the prior distribution. Sample functions that are close to the mean function generally have a higher probability density than sample functions that are remote from the mean function.

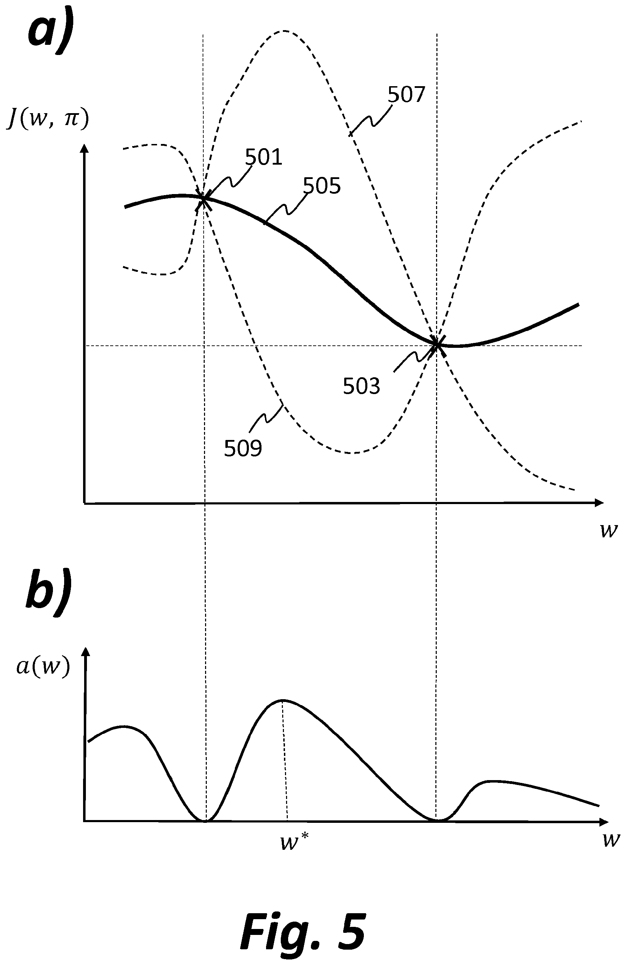

Having loaded the prior distribution into working memory at S301, the meta-agent 120 conditions, at S303, the prior distribution of $J(w,\pi)$ on the estimated value $J(w_k,\pi_k)$ for that iteration, along with the system value values estimated during each preceding iteration of optimisation, resulting in a posterior distribution of $J(w,\pi)$. For illustrative purposes, Figure 5a shows a posterior distribution of $J(w,\pi)$ in which the prior distribution of Figure 3 has been conditioned on two data points 501 and 503, corresponding to values of the system value $J(w_1,\pi)$ and $J(w_2,\pi)$ estimated during the first and second iterations of optimisation. The solid line 505 shows the mean function of the posterior distribution and the dashed curves 507 and 509 are each separated from the mean function by twice the standard deviation of the updated posterior distribution. In this example, the mean function represented by the solid line 505 passes through both of the data points, and the standard deviation of the posterior distribution is zero at these points.

The meta-agent 120 constructs, at S305, an acquisition function $a(w)$ using the posterior distribution. Unlike the unknown system value function $J(w,\pi)$, the acquisition function may be evaluated analytically from the posterior distribution of $J(w,\pi)$. In the present example, the meta-agent 120 uses the expected improvement acquisition function. Other examples of acquisition functions that may be used are upper confidence bounds, probability of improvement, and entropy search. An acquisition function establishes a trade-off between exploitation (such that a high value of the acquisition function corresponds to points where the expectation of the posterior distribution is high) and exploration (such that a high value of the acquisition function corresponds to points where the variance of the posterior distribution is high). Figure 5b shows an expected improvement acquisition function $a(w)$ determined from the posterior distribution of Figure 5a. It is observed that $a(w)$ is maximum at a value $w^*$ of the reward modifier parameter, which shows a good trade-off between exploitation (i.e. remaining close to the observed maximum) and exploration (i.e. visiting areas of high uncertainty).

The meta-agent 120 determines, at S307, the revised reward modifier parameter $w_{k+1}$ using the acquisition function. In the present example, the revised reward modifier parameter is chosen to maximise the acquisition function, so for the example of Figure 5, the meta-agent 120 would choose $w_{k+1} = w^*$. Selecting a reward modifier parameter to maximise an acquisition function leads to robustness against local maxima, such that a global maximum of $J(w,\pi)$ is reached using a relatively small number of parameter evaluations.

In the present example, varying the reward modifier parameter $w$ results in the system corresponding to a different MPG, and hence in general the set of M-NEs will change as the meta-agent 120 iteratively updates the reward modifier parameter. In other examples, the problem of a meta-agent may instead be to induce convergence to one of the existing M-NEs that is favourable to the meta-agent, whilst preserving the set of M-NEs associated with the system. This variant, including the additional constraint that the set of M-NEs must be preserved, is referred to as equilibrium selection, and represents an extremely challenging problem in game theory. The present invention provides a method of solving the equilibrium selection problem. In order to ensure that the set of M-NEs is preserved upon varying $w$, the reward modifier component $\Theta$ is restricted to lie within a class of functions referred to as potential-based functions. A reward modifier component is a potential-based function if $\Theta(s_t, u_{i,t}, u_{-i,t}, w) = \gamma\Phi(s_t, u_{i,t}, u_{-i,t}, w) - \Phi(s_{t-1}, u_{i,t-1}, u_{-i,t-1}, w)$ for all possible pairs of states $s_t$, $s_{t-1}$, for a real-valued function $\Phi$, where $\gamma$ is the discount factor introduced above (which may be equal to 1 for episodic tasks). By restricting $\Theta$ to the class of potential-based functions, it is ensured that the set of M-NEs associated with the system will be preserved when the meta-agent varies the reward modifier parameter $w$.

In some examples, an additional constraint is applied to the reward modifier parameter, such that a sum of reward modifier components over the agents 100 and a sequence of $T_c$ time steps is no greater than a predetermined value, as shown be Equation (6):

$$\sum_{i=1}^{N} \sum_{t=0}^{T_c} \Theta\left(s_t, u_{i,t}, u_{-i,t}, w\right) \leq C, \qquad (6)$$

for all states of the environment and all possible joint actions of the agents 10, where $C$ is a real constant, for example zero. For episodic tasks, $T_c$ may be equal to the number of time steps $T_s$ in an episode. The constraint of Equation (6) may be applied to constrain the reward modifier parameter in examples where the reward modifier component corresponds to a transfer of a limited resource to an agent 100 (for example, a physical or financial resource). In such a case, the constant $C$ is real valued (and may be negative) and corresponds to a bound of the net resources transferred to (or from) the agents (note that the reward modifier component may be positive or negative).

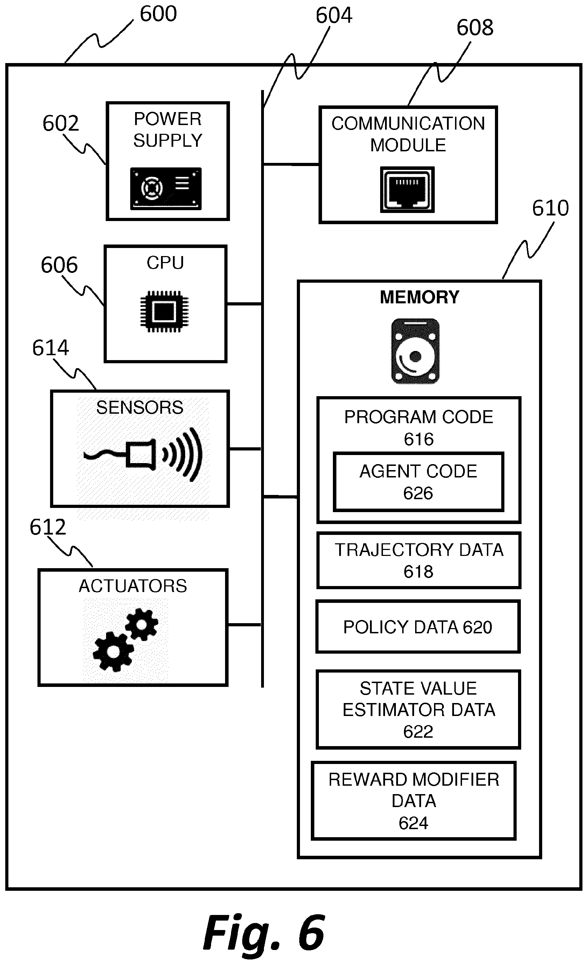

Figure 6 shows a first computing device 600 for implementing an agent in a system of agents in accordance with an embodiment of the present invention. The first computing device 600 includes a power supply 602 and a system bus 604. The system bus 604 is connected to: a CPU 606; a communication module 608; a memory 610; actuators 612; and sensors 614. The memory 610 holds: program code 616; trajectory data 618; policy data 620; state value estimator data 622; and reward modifier data 624. The program code 616 includes agent code 626, which, when executed by the CPU 606, cause the first computing device 600 to implement a reinforcement learning routine, as described in detail below.

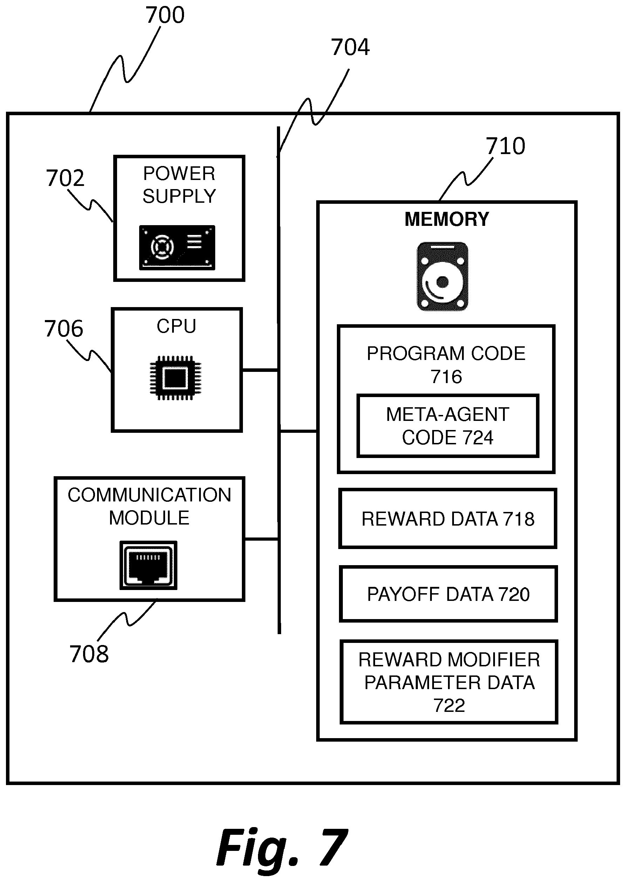

Figure 7 shows a second computing device 700 for implementing a meta-agent in accordance with an embodiment of the present invention. The second computing device 700 includes a power supply 702 and a system bus 704. The system bus 704 is connected to: a CPU 706; a communication module 708; and a memory 710. The memory 710 holds: program code 716; system reward data 718; system value data 720; and reward modifier parameter data 722. The program code 716 includes agent code 724, which, when executed by the CPU 706, cause the second computing device 700 to implement a meta-agent routine, as described in detail below.

In accordance with the present invention, the first computing device 600 executes program code 616 using the CPU 606. The program code 616 causes the first computing device 600 to make, at each of a sequence of time steps, a measurement of an environment using the sensors 614, and send an observation signal to the CPU 606 conveying data indicative of the measurement. The CPU 606 selects an action based on the data conveyed by the observation signal and the policy data 620. In this example, the policy data 620 includes connection weights, as well as the associated architecture, of a neural network for outputting parameters of a stochastic distribution representing the policy. The first computing device 600 performs the selected action using the actuators 612. The first computing device 600 takes a subsequent measurement of the environment using the sensors 614 and determines a reward depending on the subsequent measurement. In this example, the first computing device 600 determines the reward using the reward modifier data 624, where the reward modifier data 624 includes a reward modifier parameter and a function for determining a reward modifier component depending on the observation, the action, and the reward modifier parameter.

For each time step, the first computing device 600 stores trajectory data 618 corresponding to the observation signal, the action, and the reward for that time step, and the observation signal for the following time step. At the end of the sequence of time steps, the first computing device 600 updates the state value estimator data 622 using the stored trajectory data 618, and uses the updated state value estimator data 622 to update the policy data 624 using the A2C algorithm. The first computing device 600 iteratively performs the steps above, until the policy data 624 is determined to substantially correspond to a BR policy, according to predetermined convergence criteria. The first computing device 600 continues to interact with the environment and generate trajectory data 618 after the policy data 624 is determined to have converged.

The first computing device 600 sends data to the second computing device 700 using the communication module 608. In this example, the communication module 608 includes a wireless communication antenna, and the first computing device sends data to the second computing device 700 using a wireless communication protocol (for example, Long Term Evolution (LTE)). In this example, the data includes trajectory data 618 generated after the policy data 624 is determined to have converged.

The second computing device 700 executes program code 716 using the CPU 706. The second computing device 700 receives the data from the first computing device 600 using the communication module 708, and determines a system reward based on the data received from the first computing device 600, and computing devices associated with the other agents in the system of agents. The second computing device 700 stores the system reward as system reward data 718. The second computing device 700 estimates a system value using the system reward data 718, and stores the estimated system value as system value data 720. The second computing device 700 determines a revised reward modifier parameter using the system value data 720, and transmits the revised reward modifier parameter to the first computing device 600, along with the computing devices associated with the other agents in the system of agents, using the communication module 708.

The first computing device 600 receives the revised reward modifier parameter and replaces the previous reward modifier parameter in the reward modifier data 624.

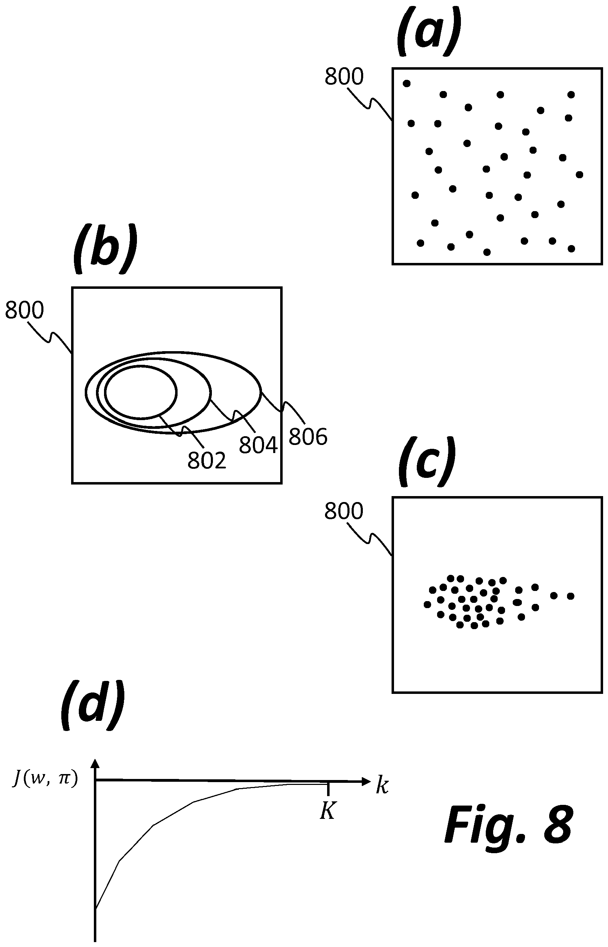

Figure 8 illustrates an example of a system of robots moving in a square region 800 in accordance with the present invention. Each robot is associated with a self-interested agent, and is able to sense its own position, as well as the positions of the other robots in the square region 800. Figure 8a shows an initial distribution of robots, which is random and assumed to correspond to a state sampled from an initial state distribution.

At each time step in an episode having a finite, predetermined number $T_s$ of time steps, each robot senses the locations of the robots in the region 800, and performs an action in accordance with a respective policy stored by the associated agent, corresponding to a movement within the region 800, and observes the resulting locations of the robots after the movement. The agent associated with each robot determines a reward depending on the joint actions performed by the robots. The reward determined by a given agent includes an intrinsic reward component that depends on the location of the associated robot (with some parts of the region 800 being intrinsically more desirable than others), and that penalises the agent in dependence on the distance moved by the associated robot. The intrinsic reward component further penalises the agent for the associated robot being located at a point in the region 800 with a high density of robots. The reward also includes a reward modifier component, which is determined according to a function parameterised by a reward modifier parameter.

Figure 8b shows a distribution of robots desired by a meta-agent that observes, at each time step, the locations of all of the robots in the region 800, where regions bounded within the closed curves 802, 804, and 806 represent regions of decreasing desired robot density The meta-agent determines a system reward for each episode which depends on a sum of distances from the desired distribution to the distributions observed at each time step (as measured by a Kullback-Leibler (KL) divergence in this example). Specifically, the system reward for an episode in this example is given by minus the sum of the KL divergences determined at each time step. The meta-agent seeks to maximise a system value corresponding to the expected system reward for an episode.

The meta-agent implements the optimisation method described herein for $K$ iterations, with each iteration including multiple episodes. A system value at each iteration is estimated as a mean of system rewards determined for a subset of episodes in which the behaviour of the agents is determined to have substantially converged to an equilibrium. At each iteration, the meta-agent determines a revised reward modifier parameter, and transmits the revised reward modifier to the system of agents for determining subsequent reward modifier components.

Figure 8c shows the distribution of robots at the end of an episode in the $K^{th}$ iteration. It is observed that, despite being controlled by independent and self-interested agents, the robots arrange themselves approximately in accordance with the desired distribution of Figure 8b. Figure 8d shows the variation of the system value estimated by the meta-agent with number of iterations. It is observed that, after $K$ iterations, the estimated system value has substantially converged, indicating that the meta-agent has determined a substantially optimal reward modifier parameter.

In the example of Figure 8, each robot is able to observe the location of each of the other robots. In other examples, each robot may only sense the locations of a subset of the other robots, for example those within a given distance of that robot, or a predetermined subset of the other robots.

The example of Figure 8 may be extended to large numbers of robots, for example thousands of robots or hundreds of thousands of robots. In the case of swarm robotics, a swarm of robots may be controlled in two or three dimensions according to a similar strategy. The example may be adapted for a continuing, rather than episodic, task, and the task itself may be dynamic, for example if the desired distribution of robots varies with time. In a specific example, the autonomous robots are autonomous vehicles moving in a city, and the region 800 corresponds to a two-dimensional map of the city. The example of Figure 8 may similarly be adapted to the problem of spectrum sharing, in which case the region 800 may correspond to a resource map within a frequency band, and an agent is associated with each of a number of communication devices seeking to share a frequency band. In such a case, the meta-agent optimises a reward modifier parameter to ensure efficient sharing of the spectrum.

The above embodiments are to be understood as illustrative examples of the invention. Further embodiments of the invention are envisaged. For example, a system of agents and a meta-agent may interact with a virtual environment, for example in a computer game or simulation, in which case the method described herein may be implemented within a single computing device having regions of memory assigned to each agent and the meta-agent, or alternatively by multiple computing devices connected by a network. In such examples, and others, agents and/or a meta-agent may have access to a complete representation of the state of the environment. In other words, the method described herein may also be applied to systems with complete observability. In any case, an agent has associated processing circuitry and memory circuitry, where the memory circuitry stores agent code which, when executed by the processing circuitry, causes the processing circuitry to perform an agent routine, which includes performing MARL to update a respective policy of the agent, as described above.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A machine learning system comprising:

   a plurality of agents, each having associated processing circuitry and associated memory circuitry, the associated memory circuitry of each agent holding a respective policy for selecting an action in dependence on the agent receiving an observation signal corresponding to an observation of an environment; and
   a meta-agent having associated processing circuitry and associated memory circuitry,
   wherein the associated memory circuitry of each agent further holds program code which, when executed by the associated processing circuitry of that agent, causes that agent to update iteratively the respective policy of that agent, each iteration of the updating comprising, for each of a sequence of time steps:

   receiving an observation signal corresponding to an observation of the environment;
   selecting an action depending on the observation and the respective policy; and
   determining a reward depending on the selected action, the reward further depending on a reward modifier parameter,

   wherein each iteration of the updating further comprises:

   generating trajectory data dependent on the observation signals received, the actions selected, and the rewards determined at each of the sequence of time steps; and
   updating the respective policy using the sequentially generated trajectory data,

   wherein the updating iteratively causes the respective policy of each of the plurality of agents to converge towards a respective stationary policy, thereby substantially inducing equilibrium behaviour between the plurality of agents, and
   wherein the associated memory circuitry of the meta-agent holds program code which, when executed by the associated processing circuitry of the meta-agent, causes the meta-agent to:

   determine a system reward depending on the equilibrium behaviour of the agents;
   determine, using the determined system reward, an estimated system value associated with the equilibrium behaviour of the agents; and
   determine, using the estimated system value, a revised reward modifier parameter for determining subsequent rewards for the plurality of agents.

2. The system of claim 1, wherein the meta-agent is arranged to transmit the revised reward modifier parameter to the plurality of agents.

3. The system of claim 1, wherein the determining a reward comprises receiving a reward signal from the environment.

4. The system of claim 3, wherein:

the meta-agent is arranged to transmit the revised reward modifier parameter to the environment; and
the reward signal received from the environment by at least one of the plurality of agents depends on the reward modifier parameter.

5. The system of any previous claim, wherein the system reward received by the meta-agent depends on trajectory data generated by the plurality of agents subsequent to the respective policy of each of the plurality of agents substantially converging to a respective stationary policy.

6. The system of claim 5, wherein each of the plurality of agents is arranged to send data to the meta-agent indicative of the trajectory data generated by that agent subsequent to the respective policy of each of the plurality of agents substantially converging to a respective stationary policy.

7. The system of any previous claim, wherein the associated memory circuitry of each agent holds a respective state value estimator for estimating a state value in dependence on that agent making observation of the environment, and wherein updating the respective policy of each agent comprises:

   updating the respective state value estimator using the sequentially generated trajectory data; and
   updating the respective policy on the basis of the updated respective state value estimator.

8. The system of claim 7, wherein each of the plurality of agents is arranged to send data to the meta-agent indicative of a respective state value estimator, and wherein the system reward determined by the meta-agent depends on a function of the respective state value estimators of the plurality of agents

9. The system of any previous claim, wherein each reward comprises an intrinsic reward component and a reward modifier component, the intrinsic reward component being independent on the reward modifier component and the reward modifier component being dependent on the reward modifier parameter.

10. The system of claim 9, wherein the revised reward modifier parameter constrains a sum of the subsequent reward modifier components over the plurality of agents and a sequence of subsequent time steps to be no greater than a predetermined value.

11. The system of any previous claim, wherein the meta-agent is arranged to determine the revised reward modifier parameter using Bayesian optimisation.

12. The system of any previous claim, wherein the reward modifier component is a potential-based function.

13. The system of any previous claim, wherein:

   each of the plurality of agents is associated with one or more sensors and one or more actuators;
   receiving an observation signal corresponding to an observation of the environment comprises taking a measurement from the one or more sensors; and
   each agent is arranged to send, for each action selected by that agent, a control signal to the one or more actuators associated with that agent.

14. The system of claim 13, wherein each of the plurality of agents is associated with a robot, and wherein each observation signal received by each agent comprises a location of the robot associated with that agent.

15. An agent having associated processing circuitry and associated memory circuitry, the associated memory circuitry holding a respective policy for selecting an action in dependence on the agent receiving an observation signal corresponding to an observation of an environment, wherein:

   the agent is arranged to receive, from a meta-agent, a reward modifier parameter for determining rewards; and
   the associated memory circuitry further holds program code which, when executed by the associated processing circuitry, causes the agent to update iteratively the respective policy, each iteration of the updating comprising, for each of a sequence of time steps:

      receiving an observation signal corresponding to an observation of the environment;

selecting an action depending on the observation signal and the respective policy; and
determining a reward depending on the selected action, the reward further depending on a reward modifier parameter,

wherein each iteration of the updating further comprises:

generating trajectory data dependent on the observation signals received, the actions selected, and the rewards determined at each of the sequence of time steps; and
updating the policy using the sequentially generated trajectory data,

wherein the updating iteratively causes the policy to converge towards a stationary policy.

16. A meta-agent having associated processing circuitry and associated memory circuitry, the associated memory circuitry holding program code which, when executed by the associated processing circuitry, causes the meta-agent to:

determine a system reward depending on an equilibrium behaviour of a plurality of agents, the equilibrium behaviour being dependent on a reward modifier parameter;
determine, using the determined system reward, an estimated system value associated with the equilibrium behaviour of the agents; and
determine, using the estimated system value, a revised reward modifier parameter for inducing subsequent equilibrium behaviour between the plurality of agents.

17. A computer-implemented method comprising each of a plurality of agents:

holding, in memory circuitry, a policy for selecting an action in dependence on that agent receiving an observation signal corresponding to an observation of an environment;
updating iteratively the respective policy of that agent, each iteration of the updating comprising, for each of a sequence of time steps:

receiving an observation signal corresponding to an observation of the environment;
selecting an action depending on the received observation signal and the respective policy; and
determining a reward depending on the selected action, the reward further depending on a reward modifier parameter,

wherein each iteration of the updating further comprises:

generating trajectory data dependent on the observation signals received, the actions selected, and the rewards determined at each of the sequence of time steps; and
updating the respective policy using the sequentially generated trajectory data,

wherein the updating iteratively causes the respective policy of each of the plurality of agents to converge towards a respective stationary policy, thereby substantially inducing equilibrium behaviour between the plurality of agents,
wherein the method further comprises a meta-agent having associated processing circuitry and associated memory circuitry:

determining a system reward depending on the equilibrium behaviour of the agents;
determining, using the determined system reward, an estimated system value associated with the equilibrium behaviour of the agents; and
determining, using the estimated system value, a revised reward modifier parameter for determining subsequent rewards for the plurality of agents.

18. A computer-implemented method comprising an agent having associated processing circuitry and associated memory circuitry:

holding, in the associated memory circuitry, a policy for selecting an action in dependence on the agent receiving an observation signal corresponding to an observation of an environment;

receiving at the communication module, from a meta-agent, a reward modifier parameter for determining rewards;

iteratively updating the policy, each iteration of the updating comprising, for each of a sequence of time steps:

receiving an observation signal corresponding to an observation of an environment;

selecting an action depending on the received observation signal and the policy; and

determining a reward depending on the selected action, the reward further depending on a reward modifier parameter,

wherein each iteration of the updating further comprises:

generating trajectory data dependent on the observation signals received, the actions selected, and the rewards determined at each of the sequence of time steps; and

updating the policy using the sequentially generated trajectory data,

wherein the iteratively updating causes the policy to converge towards a stationary policy.

19. A computer-implemented method comprising a meta-agent:

determining a system reward depending on an equilibrium behaviour of a plurality of agents, the equilibrium behaviour being dependent on a reward modifier parameter;

determining, using the determined system reward, an estimated system value associated with the equilibrium behaviour of the agents; and

determining, using the estimated system value, a revised reward modifier parameter for inducing subsequent equilibrium behaviour between the plurality of agents.

20. A computer program product comprising instructions that, when executed by processing circuitry of a computing device, causes the computing device to perform the method of claim 18 or 19.

**Fig. 1**

**Agents**

**Meta-agent**

S201 Receive observation signal

S203 Select action

S205 Receive reward signal

*T* times

*(M − 1)* times

S207 Generate trajectory data

S209 Update policy

*(K − 1)* times

S211 Receive reward signal

S213 Estimate system value

S215 Update reward modifier parameter

S217 Transmit updated reward modifier parameter

*Fig. 2*

S301 Load prior distribution

S303 Determine posterior distribution by conditioning prior distribution on estimated system values

S305 Construct acquisition function using posterior distribution

S307 Determine updated reward modifier parameter using acquisition function

# Fig. 3

**Fig. 4**

**Fig. 5**

600  604  608

602

POWER
SUPPLY

COMMUNICATION
MODULE

610

606

CPU

MEMORY

614

SENSORS

612

ACTUATORS

PROGRAM CODE
616

AGENT CODE
626

TRAJECTORY DATA
618

POLICY DATA 620

STATE VALUE
ESTIMATOR DATA
622

REWARD MODIFIER
DATA
624

# *Fig. 6*

700

704

702

POWER
SUPPLY

710

MEMORY

706

CPU

PROGRAM CODE
716

META-AGENT
CODE 724

COMMUNICATION
MODULE

REWARD DATA 718

PAYOFF DATA 720

708

REWARD MODIFIER
PARAMETER DATA
722

*Fig. 7*

Fig. 8

Europäisches Patentamt

European Patent Office

Office européen des brevets

# EUROPEAN SEARCH REPORT

Application Number

EP 18 18 6631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gianluca Baldassarre ET AL: "Evolving Mobile Robots Able to Display Collective Behaviors", Swarm-Bots project publications Artificial Life, 1 July 2003 (2003-07-01), pages 255-267, XP055549575, United States DOI: 10.1162/106454603322392460 Retrieved from the Internet: URL:http://www.swarm-bots.org/dllink.php@id=296&type=documents [retrieved on 2019-01-30] * pages 2,3; figures 1,2 * ----- | 1-20 | INV. G06F9/54 |
| X | MARCO DORIGO ET AL: "Evolving Self-Organizing Behaviors for a Swarm-Bot", AUTONOMOUS ROBOTS, KLUWER ACADEMIC PUBLISHERS, BO, vol. 17, no. 2-3, 1 September 2004 (2004-09-01), pages 223-245, XP019204897, ISSN: 1573-7527, DOI: 10.1023/B:AURO.0000033973.24945.F3 * abstract * * page 2 * * page 5 - page 9 * * page 14 - page 16 * ----- -/-- | 1-20 | TECHNICAL FIELDS SEARCHED (IPC) G06F G06N |

The present search report has been drawn up for all claims

| Place of search | Date of completion of the search | Examiner |
|---|---|---|
| The Hague | 31 January 2019 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 18 6631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | David Mguni ET AL: "Decentralised Learning in Systems with Many, Many Strategic Agents", <br><br> 13 March 2018 (2018-03-13), pages 1-20, XP055549759, <br> Retrieved from the Internet: <br> URL:https://arxiv.org/pdf/1803.05028.pdf <br> [retrieved on 2019-01-31] <br> * the whole document * <br> ----- | 1-20 | |
| T | Sergio Valcarcel Macua ET AL: "Learning Parametric Closed-Loop Policies for Markov Potential Games", <br><br> 2 February 2018 (2018-02-02), pages 1-16, XP055549769, <br> Retrieved from the Internet: <br> URL:https://arxiv.org/pdf/1802.00899.pdf <br> [retrieved on 2019-01-31] <br> * the whole document * <br> ----- | 1-20 | |

TECHNICAL FIELDS
SEARCHED (IPC)

The present search report has been drawn up for all claims

| Place of search | Date of completion of the search | Examiner |
|---|---|---|
| The Hague | 31 January 2019 | Manfrin, Max |

EPO FORM 1503 03.82 (P04C01)

page 2 of 2